# EUROPÄISCHE PATENTSCHRIFT

(11) **EP 0 298 220 B1**
(45) Veröffentlichungstag und Bekanntmachung des Hinweises auf die Patenterteilung: **01.06.1994**
(21) Anmeldenummer: 88107367.0
(22) Anmeldetag: 07.05.1988
(51) Int. Cl.: G06F 9/46, G06F 13/20

(54) **Betriebsmittelzugriffssynchronisierungseinrichtung für einen Computer mit einer Mehrzahl von Baugruppen**
Resource access synchronisation device for a computer having a plurality of components
Dispositif de synchronisation pour l'accès à une ressource pour un ordinateur à cartes multiples

(30) Priorität: 08.05.1987 DE 8706628 U
(43) Veröffentlichungstag der Anmeldung: 11.01.1989
(73) Patentinhaber: FORCE COMPUTERS GMBH, D-85579 Neubiberg (DE)
(72) Erfinder: Jäkel, Hans-Jürgen c/o Force Computers GmbH, D-8012 Ottobrunn (DE)
(74) Vertreter: Patentanwälte Dipl.-Ing. R. Splanemann Dr. B. Reitzner Dipl.-Ing. K. Baronetzky

(56) Entgegenhaltungen:
- US-A- 4 162 529

## Beschreibung

Die Erfindung betrifft einen Computer gemäß dem Oberbegriff von Anspruch 1, sowie ein Verfahren gemäß dem Oberbegriff von Anspruch 7.

Bei einem derartigen Computer mit mehreren Mikroprozessoren müssen die Aktivitäten der Prozessoren aufeinander synchronisiert werden, wenn die Prozessoren gleichberechtigt arbeiten, wenn also kein Master-Slave-Verhältnis besteht. Zur Verwaltung des Betriebsmittels "Bus" ist es bekannt, einen sog. Bus-Arbiter-Baustein einzusetzen, der den allen Prozessoren gemeinsamen Bus nach einem Zeitscheibenverfahren, einer Prioritätenregelung, nach Bedarf oder nach gemischtem Verfahren den einzelnen Prozessoren je ausschließlich zuteilt und die Zuteilung nach einem vorgegebenen Zeitablauf widerruft.

Ein derartiger Baustein muß komplexe Logikschaltungen aufweisen, die die Anforderungen der verschiedenen Prozessoren erkennen können muß und zudem aufgrund komplexer Systembedingungen über die Priorität der einzelnen auf den einzelnen Prozessoren ablaufenden Tasks entscheiden können.

Manche Betriebsmittel wie langsame Peripheriegeräte sind jedoch hinsichtlich ihrer zeitlichen Zuteilung zu den einzelnen Prozessoren erheblich weniger zeitkritisch, da die Erfordernisse des Echtzeitbetriebs in der Regel ausreichend abgepuffert werden können. Zudem würde die häufige Umschaltung der Zuteilung des Betriebsmittels zwischen einzelnen Prozessoren zu einem Verwaltungs-Overhead führen, der die tatsächliche Nutzungsdauer des Betriebsmittels einschränken würde.

Daher ist es z.B. aus der US-A 4 162 529 bekannt geworden, derartige Betriebsmittel über einen Schreib-Lese-Zyklus, der ohnehin von jedem Prozessor durchgeführt werden kann, zuzuteilen. Hierzu wird ein Datenmuster von dem Prozessor, der das Betriebsmittel belegen will, gelesen und geändert. Daher hat sich für einen derartigen Buszyklus die Bezeichnung "Read-Modify-Write-Zyklus" eingebürgert. In seltenen Fällen, die jedoch abzufangen sind, kann es vorkommen, daß zwei Prozessoren exakt zur gleichen Zeit, d.h., innerhalb des gleichen Buszyklus, auf das langsame Peripheriegerät zugreifen wollen. Dies führt zu einer Kollisionssituation, denn dann ist das Datenmuster noch nicht geändert, wenn der zweite Prozessor auf das Betriebsmittel zugreifen will. Vielmehr sieht der zweite Prozessor ein unverändertes Datenmuster und nimmt an, daß das Betriebsmittel frei ist, obwohl der erste Prozessor das Betriebsmittel bereits belegt hat. Dies würde zu einem Fehlerzustand führen.

Zur Vermeidung derartiger Kollisionssituationen ist man dazu übergegangen, den Read-Modify-Write-Zyklus ununterbrechbar zu machen. Das bedeutet, daß für die gesamte Zeit dieses Zyklus kein Interrupt erfolgen darf.

Es ist jedoch nachteilig, wenn zur Zuteilung eines langsamen Peripheriegerätes längere Buszyklen wie ein Read-Modify-Write-Zyklus ununterbrechbar sein müssen, da dann das Antwortverhalten insbesondere bei starker Auslastung leidet.

Demgegenüber ist es Aufgabe der vorliegenden Erfindung, die Zuteilung eines Betriebsmittels zu einem der Prozessoren schnell und mit geringem Aufwand zu ermöglichen.

Diese Aufgabe wird erfindungsgemäß durch Anspruch 1 gelöst. Vorteilhafte Weiterbildungen ergeben sich aus den Unteransprüchen.

Besonders vorteilhaft läßt sich die Erfindung einsetzen, wenn jeder Prozessor auf einer separaten Baugruppe angeordnet ist oder zumindest über ein Adreßsignal eindeutig identifizierbar ist. Dann kann dieses Adreßsignal dazu verwendet werden, den Belegzustand während des kurzen Nur-Lese-Zyklus anzuzeigen, so daß dadurch bereits eine Kollision ausgeschlossen wird.

Die Realisierung der Erfindung kann durch Hardware erfolgen, wobei die erforderlichen Steuersignale der Prozessoren einer Logikschaltung zugeführt werden, die dann, wenn ein Prozessor ein Betriebsmittel belegen will, einen Halterkreis setzt.

Der Haltekreis kann synchron oder asynchron gesetzt werden, wobei zu berücksichtigen ist, inwieweit die Prozessoren aufeinander synchronisiert sind. Wenn beispielsweise in Fällen enger Prozessorkopplung ein gemeinsamer Taktgenerator für mehrere Prozessoren vorgesehen ist, liegt fest, daß ein Prozessor relativ zu dem Timing eines anderen Prozessors nur zu einem definierten Zeitpunkt zugreifen kann, so daß sich eine weitere Synchronisierung erübrigt.

In an sich bekannter Weise läßt sich vorteilhaft ein Peripheriegerät wie ein Drucker zusammen mit der zugehörigen Ausgabehardware zuteilen, so daß der Ausgabekanal betriebsbereit zur Verfügung steht.

Es ist ausreichend, ein Bit in einer Speicherzelle als "Kanalbelegungsindikator" für das Betriebsmittel zu setzen. Wenn alle verwendeten Prozessoren Bitmanipulationen erlauben, ist es möglich, eins oder mehrere der restlichen Bits dieses Bytes als Indikatoren für weitere Betriebsmittel zu verwenden.

Die Verwendung von Mikroprozessoren unterschiedlicher Art ist möglich. Besonders vorteilhaft in diesem Zusammenhang bei Verwendung sowohl von sehr langsamen als auch von sehr schnellen Prozessoren ist, daß der schnelle Prozessor bei Kanalbelegung durch den langsamen Prozessor nicht einen vollen Read-Modify-Write-Zyklus des langsamen Prozessors warten muß, bevor er aktiv werden kann. Vielmehr läßt sich hier ein 50%iger, im Einzelfall bis zu 70%iger Zeitgewinn bei der Synchronisierung erzielen.

Besonders günstig ist ferner die Möglichkeit, Mikroprozessoren zu verwenden, bei denen keine Synchronisationsfunktion implementiert ist. Dies gilt auch für Mikroprozessoren der neuesten Generation, wie beispielsweise den prozessor 80386 der Firma INTEL. Mit den erfindungsgemäßen Maßnahmen läßt sich aber auch ein solcher Prozessor in einem Multiprozessorsystem, beispielsweise in einer VME-Bus-Anordnung auf einer Baugruppe betreiben, ohne daß es zu Konflikten mit Prozessoren aus den anderen Baugruppen kommen könnte.

Obwohl die zu synchronisierenden Bausteine hier als Prozessoren bezeichnet werden, ist es auch möglich, andere Bausteine, die Datenübertragungszyklen auf dem Bus von sich aus initiieren, zu synchronisieren. Hierbei wäre beispielsweise an einen DMA-Controller zu denken, der auf eine Festplatte als Betriebsmittel zugreifen will, Der Oberbegriff für derartige Bausteine ist "Master".

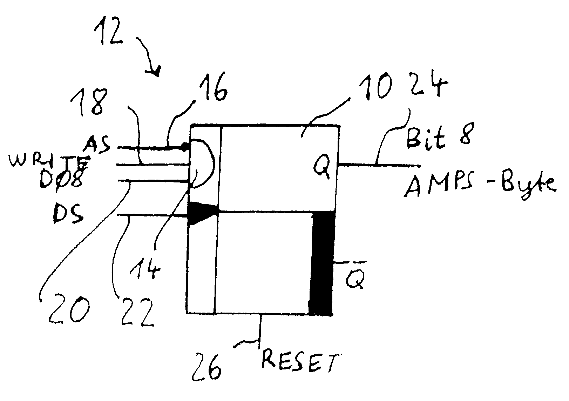

Weitere Vorteile, Einzelheiten und Merkmale der Erfindung ergeben sich aus der nachfolgenden Erläuterung eines Ausführungsbeispiels der Erfindung anhand der Zeichnung.

Es zeigt die einzige Figur eine Prinzipskizze einer Schaltung, wie sie zur Realisierung des Erfindungsgemäßen Computers verwendet werden kann.

Die Darstellung in der einzigen Figure zeigt in schematisierter Form ein Flip-Flop als Haltekreis 10, wobei selbstverständlich die Realisierung auch durch eine Speicherzelle in einem Speicher mit wahlfreiem Zugriff erfolgen kann. An dem Q-Ausgang des Flip-Flops liegt Bit 8 des Bytes zur automatischen Multiprozessorsynchronisation, des AMPS-Bytes. Die Ansteuerung des Haltekreises 10 erfolgt über Steuer-, Adreß- und Datensignale, die von jedem der zu synchronisierenden Prozessoren abgegeben werden können. In dem dargestellten Ausführungsbeispiel liegen alle Adreß- und Steuersignale in negativer Logik vor. Am Eingang AS der Sychronisierungsseinrichtung 12, die aus dem Haltekreis 10 und einer Logikschaltung 14 besteht, liegt an dem invertierten Eingang 16 das Adreßsignal AS an. Dieses schematisch bezeichnete Signal adressiert eindeutig die Synchronisierungseinrichtung 12 und kann zudem nur von einem Master gleichzeitig abgegeben werden. Das bedeutet, daß wenn das Adreßsignal AS sich auf dem logischen Pegel "0" befindet, die anderen Prozessoren keine Datenübertragung über den Datanübertragungsbus, der die Baugruppen miteinander verbindet, durchführen können.

Einem weiteren Eingang 18 der Logikschaltung 14 ist das Steuersignal WRITE zugeführt, das darüber entscheidet, ob ein Schreib- oder ein Lesezyklus durchzuführen ist. Einem dritten Eingang 20 der Logikschaltung 14 wird ferner eine mit D08 bezeichnete Leitung des Datenübertragungsbus zugeführt, die zur Identifizierung des betreffenden Bits, das die Belegung des Betriebsmittels indiziert, dient. Selbstverständlich kann auch ein beliebiges anderes Bit verwendet werden.

Ferner ist der Takteingang 22 des Haltekreises 10 mit dem Steuersignal DS verbunden. Dieses Steuersignal ist der Datentakt und liegt ebenfalls in negativer Logik vor.

Die Logikschaltung 14 ist als UND-Gatter mit den drei Eingängen 16, 18 und 20 ausgebildet, wobei lediglich der Eingang 16 invertiert ist. Der Ausgang der Logikschaltung 14 ist mit dem Dateneingang des Haltekreises 10 verbunden. Die Logikschaltung 14 wird aktiviert, wenn die Synchronisierungseinrichtung 12 durch AS eindeutig identifiziert wird, wenn ein Lesezyklus durchgeführt werden soll, wenn also das Steuersignal WRITE sich auf dem logischen Pegel "1" befindet, und wenn das betreffende Datenbit D08 abgegeben wird. In diesem Fall fragt der ein Betriebsmittel benötigende Prozessor an, ob der Haltekreis gesetzt ist, und setzt den Haltekreis 10 automatisch, wenn dies nicht der Fall sein sollte. Lediglich für diesen Lesezyklus muß der Zugriff anderer Prozessoren auf die Synchronisierungseinrichtung 12 gesperrt sein, denn die Auswertung des AMPS-Bytes kann für jeden Prozessor getrennt, d.h., ohne notwendige Synchronisierung und Sperrung der anderen Prozessoren, erfolgen. Hierzu wertet der abfragende Prozessor BIT 8 des AMPS-Bytes aus, das an dem Q-Ausgang 24 des Haltekreises 10 anliegt. Der Q̅-Ausgang des Haltekreises 10 ist nicht verschaltet.

Ferner ist das "Bereit"-Signal des Betriebsmittels mit dem Rücksetzeingang RESET 26 des Haltekreises 10 verbunden. Damit setzt das Betriebsmittel den betreffenden Kanalbelegungsindikator automatisch zurück, sobald es von dem anfragenden Prozessor nicht mehr benötig wird. Hierbei kann der Einbau einer Zeitverzögerung zweckmäßig sein, um kurzzeitige Unterbrechungen der Betriebsmittelbelegung nicht zu einer Zuteilungsänderung führen zu lassen.

Alternativ kann der Rücksetzeingang RESET 26 auch mit einer entsprechenden Logikschaltung von dem das Betriebsmittel belegenden Prozessor aktiviert werden.

Der Zugriff auf das AMPS-Byte ist von jedem Prozessor aus möglich. Wenn ein Prozessor feststellt, daß Bit 8 des AMPS-Bytes gesetzt ist, interpretiert er dies so, daß das betreffende Betriebsmittel belegt ist. Nach einer vorgegebenen Zeit, die zweckmäßig von der durchschnittlichen Belegungsdauer des Betriebsmittels abhängt, Überprüft der das Betriebsmittel benötigende Prozessor erneut den Belegungszustand des Betriebsmittels.

Alternativ kann auch über einen Interrupt-Handler als Umschalteinrichtung der Belegungszustand des Betriebsmittels dadurch zurückgesetzt werden, daß der Prozessor, der das Betriebsmittel zunächst belegt hatte, jedoch eine niedrigere Priorität als der weitere, das Betriebsmittel benötigende, Prozessor aufweist, veranlaßt wird, das Betreibsmittel freizugeben, so daß dann der weitere Prozessor das Betriebsmittel für sich belegen kann.

## Patentansprüche

1. Computer mit einer Mehrzahl von Baugruppen, die je einen Prozessor aufweisen, mit welchen Prozessoren auf mindestens ein Betriebsmittel des Computers zugreifbar ist, und mit einer von einem Master aktivierbaren Synchronisierungseinrichtung (12) für die Synchronisierung der Zugriffe durch die Prozessoren auf das Betriebsmittel, wobei die Baugruppen über eine Busanordnung miteinander verbunden sind, wobei die Synchronisierungseinrichtung (12) einen Haltekreis (10) aufweist, der die Belegung des Betriebsmittels anzeigt und der Haltekreis (10) rücksetzbar ist, sobald der eine Prozessor das Betriebsmittel nicht mehr belegt, dadurch **gekennzeichnet,** daß der von allen Prozessoren adressierbare Haltekreis (10) von einem Nur-Lese-Zyklus durch einen Prozessor aktivierbar ist und zugleich ein Blockierungssignal abgibt, das den Zugriff der anderen Prozessoren auf die Busanordnung während des Nur-Lese-Zyklus des einen Prozessors verhindert.

2. Computer nach Anspruch 1, dadurch gekennzeichnet, daß der Haltekreis (10) durch ein Register gebildet wird, daß in einer Baugruppe in unmittelbarer Verbindung mit der Busanordnung derart angeordnet ist, daß die weiteren Prozessoren unmittelbar auf das Register zugreifen können.

3. Computer nach einem der vorhergehenden Ansprüche, dadurch gekennzeichnet, daß das Betriebsmittel mit der Busanordnung über eine Baugruppe verbunden ist, die den Haltekreis (10) aufweist.

4. Computer nach einem der vorhergehenden Ansprüche, dadurch gekennzeichnet, daß eine Mehrzahl von Betriebsmitteln vorgesehen sind, denen je ein Haltekreis (10) zugeordnet ist, wobei die Haltekreise durch einen Speicherbaustein gebildet sind, der je Betriebsmittel eine Speicherzelle aufweist.

5. Computer nach einem der vorhergehenden Ansprüche, dadurch gekennzeichnet, daß die Prozessoren eine Umschalteinrichtung aufweisen, welche von einem Schreib-Lese-Zyklus auf einen Nur-Lese-Zyklus umschaltet, wenn und nur wenn der der Umschalteinrichtung zugeordnete Prozessor auf ein mit weiteren Prozessoren zu teilendes Betriebsmittel zurückgreift.

6. Computer nach einem der vorhergehenden Ansprüche, dadurch gekennzeichnet, daß das Betriebsmittel ein Drucker, ein Plotter, ein langsamer Hintergrundsspeicher oder eine sonstige Peripherieeinheit ist, der den Haltekreis (10) zurücksetzt.

7. Verfahren zur Synchronisierung der Aktivitäten mehrerer je einen Prozessor aufweisenden Baugruppen, die in einem Multiprozessorsystem über eine Busanordnung miteinander kommunizieren und von denen mindestens zwei auf mindestens ein Betriebsmittel eines Computers zugreifen können, wobei die Synchronisierung der Prozessoren gegeneinander über einen nicht unterbrechbaren Buszyklus erfolgt, dadurch gekennzeichnet, daß der nicht unterbrechbare Buszyklus einen Nur-Lese-Zyklus aufweist, der auf einen Haltekreis (10) zugreift, dessen Adressen allen Prozessoren zugänglich sind, und daß durch den Nur-Lese-Zyklus der Haltekreis (10) automatisch gesetzt wird, um ein Belegtsignal für das Betriebsmittel zu erzeugen.

8. Verfahren nach Anspruch 7, dadurch gekennzeichnet, daß das Betriebsmittel mit einem unterbrechbaren Schreib-Buszyklus, der auf den Haltekreis (10) wirkt, freigegeben wird.

## Claims

1. A computer with a plurality of units, each of which has a processor, with which processors at least one resource of the computer is accessible, and with a synchronising device (12), which can be activated by a master, for synchronising the accesses through the processors to the resource, wherein the units are connected to one another via a bus assembly, wherein the synchronising device (12) has a holding circuit (10) which displays the occupancy of the resource and the holding circuit (10) can be reset as soon as one processor no longer occupies the resource, characterised in that the holding circuit (10) which can be addressed by all the processors can be activated through the processor by a read-only cycle and at the same time emits an inhibiting signal which prevents the access of the other processors to the bus assembly during the read-only cycle of one processor.

2. A computer according to Claim 1, characterised in that the holding circuit (10) is formed by a register which is arranged in a unit in direct connection with the bus assembly in such a way that the other processors can directly access the register.

3. A computer according to either of the preceding Claims, characterised in that the resource is connected with the bus assembly via a unit which has the holding circuit (10).

4. A computer according to any of the preceding Claims, characterised in that a plurality of resources is provided, each of which is associated with a holding circuit (10), wherein the holding circuits are formed by a memory device which has one memory cell per resource.

5. A computer according to any of the preceding Claims, characterised in that the processors have a switching device which switches from a read-write cycle to a read-only cycle when and only when the processor associated with the switching device reverts to a resource to be shared with other processors.

6. A computer according to any of the preceding Claims, characterised in that the resource is a printer, a plotter, a slow backing store or other peripheral unit which resets the holding circuit (10).

7. A method of synchronising the activities of a plurality of units, each of which has one processor and which communicate with one another in a multiprocessor system via a bus assembly and at least two of which can revert to at least one resource of a computer, wherein the synchronising of the processors with respect to one another is effected via a non-interruptible bus cycle, characterised in that the non-interruptible bus cycle has a read-only cycle which reverts to a holding circuit (10), the addresses of which are accessible to all the processors, and in that the holding circuit (10) is automatically set by the read-only cycle so as to generate a busy signal for the resource.

8. A method according to Claim 7, characterised in that the resource is released by an interruptible write-bus cycle which acts on the holding circuit (10).

## Revendications

1. Ordinateur comprenant une pluralité de groupes de composants, qui présentent chacun un processeur, lesquels processeurs permettent l'accès à au moins une ressource de l'ordinateur, et avec un dispositif de synchronisation (12) pouvant être activé par un maître pour la synchronisation des accès par les processeurs à la ressource, les groupes de composants étant reliés entre eux par une disposition en bus, le dispositif de synchronisation (12) présentant un circuit de blocage (10), qui indique l'occupation de la ressource et le circuit de blocage (10) pouvant être ramené en arrière dès que l'un des processeurs n'occupe plus la ressource, caractérisé en ce que le circuit de blocage (10) qui peut être adressé par tous les processeurs peut être activé par un cycle de lecture seule par un processeur et émet en même temps un signal de blocage qui empêche l'accès des autres processeurs à la disposition de bus pendant le cycle de lecture seule de l'un des processeurs.

2. Ordinateur selon la revendication 1, caractérisé en ce que le circuit de blocage (10) est formé par un registre, qui est disposé dans un groupe de composants en liaison directe avec la disposition de bus, de telle sorte que les autres processeurs puissent accéder directement au registre.

3. Ordinateur selon l'une ou l'ensemble des revendications précédentes, caractérisé en ce que la ressource est reliée à la disposition de bus par un groupe de composants qui présente le circuit de blocage (10).

4. Ordinateur selon l'une ou l'ensemble des revendications précédentes, caractérisé en ce qu'une pluralité de ressources sont prévues, qui correspondent chacune à un circuit de blocage (10), les circuits de blocage étant formés par un élément de mémoire qui présente une cellule de mémoire par ressource.

5. Ordinateur selon l'une ou l'ensemble des revendications précédentes, caractérisé en ce que les processeurs présentent un dispositif de commutation, qui passe d'un cycle de lecture-écriture à un cycle de lecture seule, si et seulement si le processeur relié au dispositif de commutation se réfère à une ressource à partager avec d'autres processeurs.

6. Ordinateur selon l'une ou l'ensemble des revendications précédentes, caractérisé en ce que la ressource est une imprimante, un traceur, une mémoire de fond lente ou un autre périphérique, qui ramène le circuit de blocage (10) en arrière.

7. Procédé pour la synchronisation des activités de plusieurs groupes de composants présentant chacun un processeur, qui communiquent entre eux dans un système de multiprocesseur par l'intermédiaire d'une disposition de bus et dont au moins deux peuvent se relier à au moins une ressource d'un ordinateur, la synchronisation des processeurs les uns avec les autres étant réalisée par un cycle de bus impossible à interrompre, caractérisé en ce que le cycle de bus impossible à interrompre présente un cycle de lecture seule qui accède à un circuit de blocage (10) dont les adresses sont accessibles à tous les processeurs, et en ce que le cycle de lecture seule règle automatiquement le circuit de blocage (10) pour qu'il produise un signal d'occupation pour la ressource.

8. Procédé selon la revendication 7, caractérisé en ce que la ressource est libérée par un cycle de bus d'écriture impossible à interrompre, qui agit sur le circuit de blocage (10).
